# EUROPÄISCHE PATENTSCHRIFT

(11) **EP 1 249 726 B1**
(45) Veröffentlichungstag und Bekanntmachung des Hinweises auf die Patenterteilung: **27.07.2005**
(21) Anmeldenummer: 02100058.3
(22) Anmeldetag: 25.01.2002
(51) Int. Cl.: G02B 21/18, G02B 21/22, G02B 21/06, G02B 21/24, G02B 21/00, A61B 19/00

(54) **Mikroskop**
Microscope
Microscope

(30) Priorität: 27.01.2001 DE 10103641
(43) Veröffentlichungstag der Anmeldung: 16.10.2002
(73) Patentinhaber: Leica Microsystems (Schweiz) AG, 9435 Heerbrugg (CH)
(72) Erfinder: Müntener, Jürg, 9436, Balgach (CH)
(74) Vertreter: Rosenich, Paul, Dipl.-Ing.

(56) Entgegenhaltungen:
- DE-A- 4 243 452
- DE-A- 19 507 344
- DE-U- 8 902 710
- PATENT ABSTRACTS OF JAPAN vol. 1995, no. 03, 28. April 1995 (1995-04-28) -& JP 06 347703 A (OLYMPUS OPTICAL CO LTD), 22. Dezember 1994 (1994-12-22)
- PATENT ABSTRACTS OF JAPAN vol. 1996, no. 07, 31. Juli 1996 (1996-07-31) -& JP 08 068944 A (NIKON CORP), 12. März 1996 (1996-03-12)

## Beschreibung

Die Erfindung bezieht sich auf ein Mikroskop gemäß dem Oberbegriff des Patentanspruchs 1.

Ein gattungsgemäßes Mikroskop ist beispielsweise aus der US-A-5 303 082 bekannt. Dieses bekannte Stereo- Mikroskop weist einen Grundkörper auf, an bzw. in dem Mikroskopobjektive, die teilweise gemeinsam benutzte Komponenten aufweisen, zwei Okulare sowie eine Reihe von Strahlteilern angeordnet sind. Die Strahlteiler sind in den Strahlengängen zwischen den Mikroskopobjektiven und den Okularen vorgesehen. Die Strahlteiler dienen zum einen dazu, Licht von Beleuchtungslichtquellen zur Beleuchtung des beobachteten Objekts koaxial in den Strahlengang einzuspiegeln, und zum anderen dazu, Mitbeobachtungsmöglichkeiten zu schaffen.

Weiterhin ist aus der DE-A-36 08 242 ein Spaltlampen-Mikroskop für ophthalmologische Anwendungen bekannt, bei dem in den Strahlengang zwischen dem Mikroskopobjektiv und dem Okular ein Strahlteiler derart eingesetzt ist, dass ein Bild in den zum Okular gehenden Strahlengang eingespiegelt wird. Dieses Bild, bei dem es sich beispielsweise um ein Angiografiebild handeln kann, überlagert sich dem "aktuellen" Mikroskopbild, so dass der Betrachter das Mikroskopbild mit dem Angiografiebild vergleichen und gegebenenfalls zur Deckung bringen kann.

Allen bekannten gattungsgemäßen Mikroskopen ist gemeinsam, dass der oder die Strahlteiler fest in den Strahlengang eingesetzt sind, also fest am Grundkörper bzw. Chassis des Mikroskops oder in einem Strahlenteilergehäuse angebracht sind.

Diese Ausbildung der bekannten gattungsgemäßen Mikroskope hat eine Reihe von Nachteilen:
1. Die fest in den bzw. die Strahlengänge eingesetzten Strahlteiler reduzieren die Helligkeit des Mikroskopbildes unnötig, wenn das Einspiegeln in bzw. das Ausspiegeln aus dem jeweiligen Strahlengang nicht benötigt wird.
2. Durch die Anordnung der jeweiligen Strahlteiler ist die Richtung festgelegt, in der ein Einspiegeln bzw. Ausspiegeln aus den Strahlengängen erfolgt.
3. Die fest eingebauten Strahlteiler erlauben keine Variationsmöglichkeit beispielsweise hinsichtlich des Teilungsverhältnisses der auftreffenden Lichtintensität, der Art der verwendeten Strahlteiler oder dgl..
4. Die beiden Strahlengänge des aus der US-A-5 303 082 bekannten gattungsgemäßen Stereo-Mikroskops sowie auch anderer Stereomikroskope sind symmetrisch aufgebaut; es ist also nicht möglich, in dem einen Strahlengang das Mikroskopbild auszuspiegeln und in den anderen Strahlengang ein Bild einzuspiegeln, das sich dem Mikroskopbild überlagert.

Auf den genannten Stand der Technik wird im übrigen zur Erläuterung aller hier nicht beschriebenen Einzelheiten ausdrücklich Bezug genommen.

Der Erfindung liegt die Aufgabe zugrunde, ein Mikroskop gemäß dem Oberbegriff des Patentanspruchs 1 derart weiterzubilden, dass es dem Benutzer des Mikroskops überlassen bleibt, ob und - wenn ja - in welche Richtung er Bilder bzw. Licht in bzw. aus dem Mikroskop-Strahlengang oder den Mikroskop-Strahlengängen ein- bzw. ausspiegeln will.

Eine erfindungsgemäße Lösung dieser Aufgabe ist im Patentanspruch 1 angegeben. Weiterbildungen der Erfindung sind Gegenstand der Unteransprüche.

Der Erfindung liegt der Grundgedanke zugrunde, Strahlteiler und insbesondere Teilerprismen nicht fest in dem Strahlengang bzw. den Strahlengängen des Mikroskops bzw. des Strahlenteilergehäuses anzuordnen, sondern einen Träger zu verwenden, an dem der/die Strahlteiler angebracht ist/sind. Der Strahlteiler bzw. das Teilerprisma ist damit ein von dem eigentlichen optischen Aufbau des Mikroskops getrenntes Teil, das zusammen mit dem Träger in einen Einschub bzw. eine Ausnehmung in dem Grundkörper bzw. dem Chassis des Mikroskops einsetzbar und aus dem Einschub wieder entnehmbar ist.

Diese erfindungsgemäße Ausbildung ermöglicht eine - verglichen mit bekannten Mikroskopen - wesentlich größere Flexibilität beim Einsatz des erfindungsgemäßen Mikroskops.

So ist es möglich, als Strahlteiler unterschiedliche Teiler einzusetzen. Beispielsweise können unterschiedliche Intensitätsteiler - wie Teilerprismen - verwendet werden, die in Abhängigkeit von dem jeweils verwendeten Mikroskop-Zubehörteil unterschiedliche Intensitätsanteile ausspiegeln bzw. durchlassen, deren Teilungsverhältnis also insbesondere vom Verhältnis 50:50 abweichen kann. Ferner ist es auch möglich, Strahlteiler einzusetzen, die keine Intensitätsteilung, sondern eine wellenlängen-spezifische (d.h. wellenlängen-selektive) und/oder polarisationszustands-spezifische Teilung vornehmen.

Ferner können an dem Träger weitere optische Bauelemente angebracht sein.

Diese optischen Bauelemente können beispielsweise Filter - wie Laserschutzfilter beim Einsatz eines Lasers als Behandlungs-oder Bearbeitungslichtquelle - oder Polarisatoren sein. Ferner können Kompensationselemente eingesetzt werden, die unterschiedliche optische Wirkungen bzw. optische Weglängen der verschiedenen eingesetzten Strahlteiler ausgleichen.

Da in der Regel der Strahlteiler in die Berechnung der Grundkonfiguration des optischen Aufbaus des Mikroskops mit einbezogen ist, ist es ferner bevorzugt, dass dann, wenn in einem Strahlengang des Mikroskops kein Strahlteiler eingesetzt ist, in die jeweilige Ausnehmung ein an einem Träger gehaltenes Element eingesetzt ist, dessen optische Eigenschaften mit Ausnahme der Teilerwirkung denjenigen des Strahlteilers entspricht. Im Falle eines Teilerprismas kann eine planparallele Platte eingesetzt werden, deren optische Weglänge derjenigen des als Strahlteiler eingesetzten Teilerprismas entspricht.

Im Rahmen des erfindungsgemäßen Grundgedankens sind selbstverständlich die verschiedensten Abwandlungen und Ergänzungen möglich.

So ist es möglich, dass im Strahlengang des Mikroskops nacheinander mehrere Einschübe vorgesehen sind, so dass die unterschiedlichsten Mikroskop-Zubehörteile gemeinsam eingesetzt werden können.

In jedem Falle ist es bevorzugt, wenn der Träger in den Einschub derart eingepasst ist, dass der Strahlteiler ohne eine weitere Justierung nach dem Einsetzen relativ zum Strahlengang justiert ist.

Weiterhin können die Träger eine Kodierung aufweisen, die einer Mikroskop-Steuereinheit Informationen über das optisch mit dem Mikroskop-Strahlengang verbundene Mikroskop-Zubehörteil übermittelt. Wenn beispielsweise ein Laser als Zubehörteil verwendet wird, kann mittels der Kodierung der Steuereinheit mitgeteilt werden, dass ein Laser an das Mikroskop angesetzt ist. Die Steuereinheit sorgt dann dafür, dass der Laser nur ausgelöst werden kann, wenn ein Schutzfilter in den Strahlengang eingesetzt bzw. eingeschwenkt ist. Ferner kann die Steuereinheit an Hand der Kodierung eine Anpassung des Mikroskops vornehmen und beispielsweise selbsttätig entsprechende Kompensationselemente für die optische Wirkung des eingesetzten Strahlteilers in den Strahlengang einschwenken.

Bezüglich der Ausbildung des Träger sind ebenfalls die verschiedensten Ausführungen möglich.

Beispielsweise kann der Träger integrierter Bestandteil eines Mi kroskop-Zubehörteils, wie einer Mitbeobachtungseinheit, einer Beleuchtungs- oder Behandlungs- bzw. Bearbeitungslichtquelle, deren Licht insbesondere koaxial in den Strahlengang zur Beleuchtung bzw. Bearbeitung des beobachteten Objekts einspiegelbar ist, oder einer Einrichtung sein, die im Okularbild dem Mikroskopbild ein eingespiegeltes Bild - wie beispielsweise ein AngiografieBild und/oder Anzeigen oder dgl. - überlagert.

Alternativ kann der Träger an seinem dem Strahlteiler abgewandten - d. h. seinem nicht in den Einschub - eingesetzten - Ende eine Kupplung aufweisen, an der unterschiedliche Mikroskop-Zubehörteile, wie die exemplarisch vorstehend genannten Einheiten, anbringbar sind.

Der Träger ist um 180° um eine zum Strahlengang senkrechte Achse gedreht in den Einschub des Mikroskops einsetzbar, so dass der Strahlteiler je nach Einsetzrichtung zum Ein- bzw. zum Ausspiegeln verwendbar ist. Dies bedeutet eine große Kostenersparnis, da für unterschiedliche Zubehörteile nicht mehrere Träger mit jeweils unterschiedlichen Strahlteilern angeschafft werden müssen. Zudem kann beliebig zwischen links/rechts und Ein-/Ausspiegeln gewählt werden.

Als Mikroskope können selbstverständlich die verschiedensten bekannten Mikroskope - wie Stereomikroskope und insbesondere Operationsmikroskope - eingesetzt werden. Die Erfindung ist hierbei nicht auf einen spezifischen Mikroskopaufbau beschränkt.

Bei einem Stereomikroskop ist es bevorzugt, wenn in beiden Strahlengängen Einschübe bzw. Ausnehmungen für Träger vorgesehen sind. Auf Grund des erfindungsgemäßen Aufbaus ist es möglich, dass dann in den beiden Strahlengängen unterschiedliche Mikroskop-Zubehörteile entsprechend dem jeweiligen Anwendungsfall eingesetzt werden.

Die Erfindung wird nachstehend an Hand eines Ausführungsbeispiels unter Bezugnahme auf die Zeichnung näher beschrieben, in der zeigen:
- Fig. 1 und 2:: eine Darstellung zur Erläuterung des Standes der Technik bzw. zur Erläuterung der Beschränkungen des Standes der Technik,und
- Fig. 3:: ein Ausführungsbeispiel der Erfindung.

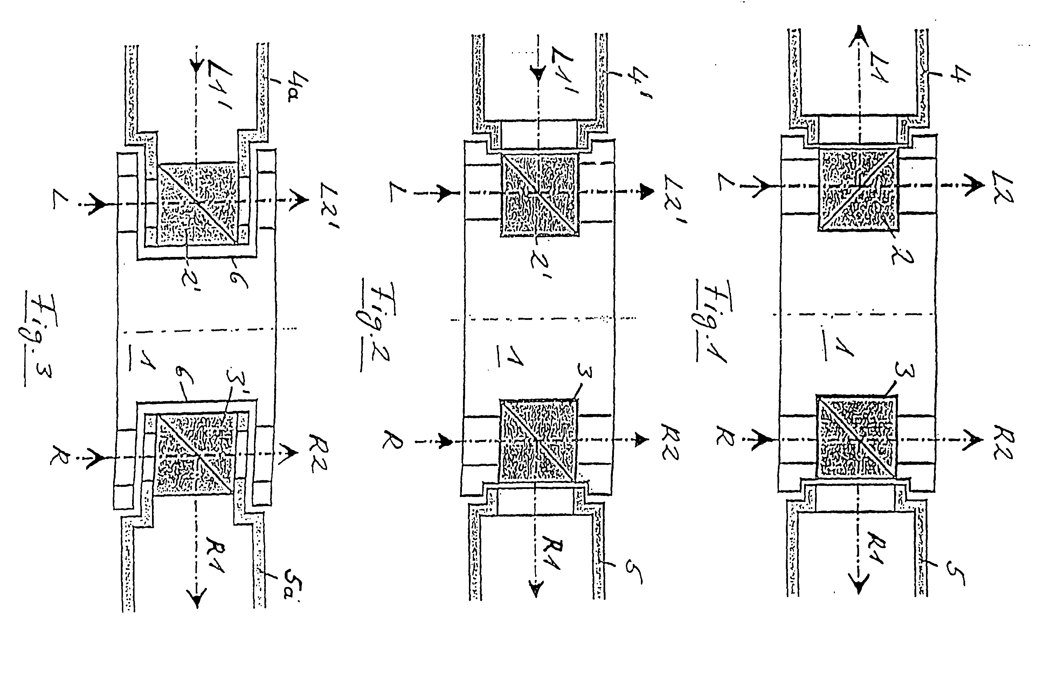

In den folgenden Figuren sind gleiche Teile immer mit denselben Bezugszeichen bezeichnet, so dass auf eine erneute Vorstellung übereinstimmender Teile bei der Beschreibung der Figuren 2 und 3 zumindest teilweise verzichtet wird.

Fig. 1 zeigt den Grundaufbau eines bekannten Mikroskops. Zur Vereinfachung der Darstellung sind dabei sowohl das bzw. die Mikroskopobjektive als auch die Okulare weggelassen. In Fig. 1 ist lediglich ein Grundkörper- bzw. Strahlenteilergehäuse- bzw. Chassis-Teil 1 des Mikroskops dargestellt, in dem der linke Strahlengang L bzw. der rechte Strahlengang R von den nicht dargestellten Mikroskopobjektiven bzw. von einem gemeinsamen Objektiv zu den ebenfalls nicht dargestellten Okularen in Richtung der Pfeile längs der strichpunktierten Linien verläuft.

In das Grundkörperteil 1 sind bei dem in Fig. 1 dargestellten Mikroskop Teilerprismen 2 und 3 fest eingesetzt, die einen Teil des Lichts - L1 bzw. R1 - aus dem zu den Okularen durchgehenden Strahlengang - L2 bzw. R2 - ausspiegeln. An den Grundkörperteil 1 sind bei dem in Fig. 1 dargestellten Ausführungsbeispiel nur schematisch dargestellte Mikroskop-Zubehörteile 4 bzw. 5 angesetzt, bei denen es sich beispielsweise um MitbeobachtungsMöglichkeiten oder Videoaufnehmer handeln kann.

Auf Grund des in Fig. 1 dargestellten Aufbaus sind sowohl die Tatsache, dass eine Strahlteilung erfolgt, als auch die Richtung und die Art der Strahlteilung sowie auch die Seitenwahl links/rechts unveränderlich vorgegeben, da die als Strahlteiler eingesetzten Teilerprismen 2 und 3 fest mit dem Grundkörperteil 1 verbunden sind.

Fig. 2 zeigt eine Variante des in Fig. 1 dargestellten Mikroskops, bei dem an Stelle des Teilerprismas 2 ein Teilerprisma 2' eingesetzt wird, das Licht von dem Mikroskop-Zubehörteil 4' in Richtung auf das nicht dargestellte linke Okular einspiegelt bzw. umlenkt. Damit überlagert sich im Auge eines Beobachters der eingespiegelte Strahlengang L1' und der Strahlengang L zu dem Strahlengang L2'. Der rechte Strahlengang R entspricht dem in Verbindung mit Fig. 1 beschriebenen Strahlengang. Auch diese bekannte Variante hat die vorstehend beschriebenen Nachteile.

Fig. 3 zeigt ein Ausführungsbeispiel der Erfindung, bei dem in Übereinstimmung mit Fig. 2 Teilerprismen 2' und 3' im linken und im rechten Strahlengang L bzw. R angeordnet sind.

Anders als bei den in Verbindung mit den Figuren 1 und 2 beschriebenen bekannten Mkroskopen sind die Teilerprismen 2' und 3' nicht mit dem Grundkörperteil 1 verbunden, sondern Bestandteil der Mikroskop-Zubehörteile 4a bzw. 5a. Diese Mikroskop-Zubehörteile 4a bzw. 5a, die als Träger der Teilerprismen 2' und 3' dienen, sind so ausgebildet, dass sie jeweils in einen Einschub bzw. in eine Ausnehmung 6 des Grundkörperteils 1 eingesetzt werden können. Die Toleranzen zwischen den Ausnehmungen 6 und den Trägerabschnitten der Zubehörteile 4a bzw. 5a sind dabei so ausgelegt, dass die Teilerprismen 2' und 3 relativ zu den Strahlengängen UL2' bzw. R/R2 ohne weitere Maßnahmen justiert sind.

Selbstverständlich können die Mikroskop-Zubehörteile 4a bzw. 5a auch gegeneinander vertauscht werden oder in beide Ausnehmungen 6 eine Sorte von Zubehörteilen - beispielsweise solche, die den Strahlengang ausspiegeln - eingesetzt werden. Weiterhin kann das Grundkörperteil 1 auch mehrere Ausnehmungen bzw. Einschübe 6 in jedem (Teil-)Strahlengang enthalten.

### Bezugszeichenliste

- 1: Grundkörperteil bzw. Chassisteil bzw. Strahlenteilergehäuse
- 2, 2': Teilerprisma/-prismen
- 3, 3': Teilerprisma/-prismen
- 4, 4', 4a: Zubehörteil(e)
- 5, 5', 5a: Zubehörteil(e)
- 6: Ausnehmung(en)
- L, L1, L1', L2, L2': linke Strahlengänge
- R, R1, R2: rechte Strahlengänge

## Patentansprüche

1. Stereomikroskop mit einem Grundkörper (1), an bzw. in dem wenigstens ein Mikroskopobjektiv, wenigstens ein Okular und wenigstens ein Strahlteiler (2' bzw. 3') angeordnet sind, der in einem Strahlengang (L/L2' bzw. R/R2) zwischen dem Mikroskopobjektiv und dem Okular vorgesehen ist und der einen Teil des Lichts aus dem Strahlengang zum Okular ausspiegelt bzw. Bilder in den zum Okular gehenden Strahlengang einspiegelt, **dadurch gekennzeichnet, dass** der Strahlteiler (2' bzw. 3') an einem Träger (4a bzw. 5a) angebracht ist, der zusammen mit dem Strahlteiler (2' bzw. 3') jeweils einzeln in eine Ausnehmung (6) für den Strahlengang (UL2') oder wahlweise in eine Ausnehmung (6) für den anderen Strahlengang (R/R2) in dem Grundkörper (1) einsetz- bzw. entnehmbar ist, wobei der/die Träger (4a bzw. 5a) jeweils einzeln um 180° um eine zu den Strahlengängen (L/L2' bzw. R/R2) senkrechte Achse gedreht in die Ausnehmung (6) für den jeweiligen Strahlengang (L/L2'bzw. R/R2) einsetzbar ist/sind, sodass der Strahlteiler (2' bzw. 3') je nach Einsetzrichtung zum Ein- bzw. Ausspiegeln verwendbar ist.

2. Stereomikroskop nach Anspruch 1, **dadurch gekennzeichnet, dass** der Träger (4a, 5a) in die jeweilige Ausnehmung (6) derart eingepasst ist, dass der Strahlteiler (2', 3') ohne eine weitere Justierung nach dem Einsetzen relativ zum Strahlengang (UL2' bzw. R/R2) justiert ist.

3. Stereomikroskop nach Anspruch 1, **dadurch gekennzeichnet, dass** der Träger integrierter Bestandteil eines Stereomikroskop-Zubehörteils ist **und dass** das Stereomikroskop-Zubehörteil eine Mitbeobachtungseinheit, eine Beleuchtungs- oder Behandlungs- bzw. Bearbeitungslichtquelle, deren Licht insbesondere koaxial in den Strahlengang zur Beleuchtung bzw. Bearbeitung des beobachteten Objekts einspiegelbar ist oder eine Einrichtung ist, die im Okularbild dem Stereomikroskopbild ein eingespiegeltes Bild und/oder Anzeigen oder dgl. überlagert.

4. Stereomikroskop nach einem der Ansprüche 1-3, **dadurch gekennzeichnet, dass** das Stereomikroskop ein Operationsmikroskop ist.

5. Stereomikroskop nach einem der Ansprüche 1-4, **dadurch gekennzeichnet, dass** dann, wenn in einem der Strahlengänge (L/L2' bew. R/R2) des Stereomikroskops kein Strahlteiler (2' bzw. 3') eingesetzt ist, in die Ausnehmung (6) dieses Strahlenganges eine an einem Träger gehaltene planparallele Platte eingesetzt ist, deren optische Weglänge der des Strahlteilers (2' bzw. 3') entspricht und dass als Strahlteiler unterschiedliche Teiler - wie Intensitäts-, Wellenlängen- und/oder Polarisations-Zustands-spezifische Teiler - einsetzbar sind.

6. Stereomikroskop nach einem der Ansprüche 1-5, **dadurch gekennzeichnet, dass** die Träger eine Kodierung aufweisen, die einer Steuereinheit Informationen über das optisch mit dem jeweiligen Strahlengang (L/L2' bzw. R/R2) verbundene Stereomikroskop-Zubehörteil übermittelt **und dass** die Steuereinheit anhand der Kodierung eine Anpassung des Stereomikroskops vornimmt.

## Claims

1. Stereomicroscope comprising a body (1) on or in which at least one microscope objective lens, at least one eyepiece and at least one beam splitter (2' or 3') are arranged, which is provided in a beam path (L/L2' or R/R2) between the microscope objective lens and the eyepiece and which reflects part of the light out of the beam path to the eyepiece or reflects images into the beam path to the eyepiece, **characterized in that** the beam splitter (2' or 3') is mounted on a support (4a or 5a, respectively) which, together with the beam splitter (2' or 3'), can in each case individually be inserted into a recess (6) for the beam path (L/L2') or alternatively into a recess (6) for the other beam path (R/R2) in the body (1) or can be removed therefrom, the support or supports (4a and/or 5a) being capable of being inserted in each case individually into the recess (6) for the respective beam path (L/L2' or R/R2) after being rotated 180° about an axis perpendicular to the beam paths (L/L2' and R/R2), so that the beam splitter (2' or 3') can be used for reflecting in or reflecting out, depending on the direction of insertion.

2. Stereomicroscope according to Claim 1, **characterized in that** the support (4a, 5a) can be fitted into the respective recess (6) in such a way that the beam splitter (2', 3') is adjusted relative to the beam path (L/L2' or R/R2) without further adjustment after insertion.

3. Stereomicroscope according to Claim 1, **characterized in that** the support is an integral part of a stereomicroscope accessory, and **in that** the stereomicroscope accessory is a co-observation unit, an illumination or treatment or processing light source whose light in particular can be reflected coaxially into the beam path for illumination or processing of the observed object or is a means which superposes a reflected-in image and/or displays or the like on the stereomicroscope image in the eyepiece image.

4. Stereomicroscope according to any of Claims 1-3, **characterized in that** the stereomicroscope is a surgical microscope.

5. Stereomicroscope according to any of Claims 1-4, **characterized in that**, when no beam splitter (2' or 3') is used in one of the beam paths (L/L2' or R/R2) of the stereomicroscope, a plane parallel plate which is held on its support and whose optical distance corresponds to that of the beam splitter (2' or 3') is inserted into the recess (6) of this beam path, and **in that** different splitters - such as intensity-specific, wavelength-specific and/or polarization state-specific splitters - can be used as beam splitters.

6. Stereomicroscope according to any of Claims 1-5, **characterized in that** the supports have a coding which provides a control unit with information about the stereomicroscope accessory optically connected to the respective beam path (L/L' or R/R2), and **in that** the control unit adapts the stereomicroscope on the basis of the coding.

## Revendications

1. Stéréomicroscope comprenant un corps de base (1), auquel ou dans lequel au moins un objectif de microscope, au moins un oculaire et au moins un dispositif de fractionnement des rayons (2' ou 3') sont disposés, qui est prévu dans une marche des rayons (L/L2' ou R/R2) entre l'objectif de microscope et l'oculaire et qui réfléchit part de la lumière hors de la marche des rayons vers l'oculaire ou réfléchit des images dans la marche des rayons vers l'oculaire, **caractérisé en ce que** le dispositif de fractionnement des rayons (2' ou 3') est attaché à un support (4a ou 5a), qui peut être inséré ou pris séparément, conjointement avec le dispositif de fractionnement des rayons (2' ou 3'), dans un creux (6) pour la marche des rayons (L/L2') ou sélectivement dans un creux (6) pour l'autre marche des rayons (R/R2) dans le corps de base (1), le/les support(s) (4a ou 5a) pouvant être inséré(s) dans le creux (6) pour la marche des rayons respective (L/L2' ou R/R2) chacun individuellement tourné par 180° autour d'un axe perpendiculaire aux marches des rayons (L/L2' ou R/R2) de manière que le dispositif de fractionnement des rayons (2' ou 3') peut être utilisé pour réfléchir dans ou hors selon la direction d'insertion.

2. Stéréomicroscope selon la revendication 1, **caractérisé en ce que** le support (4a, 5a) est encastré dans le creux (6) respectif de façon, que le dispositif de fractionnement des rayons (2', 3') est ajusté relativement à la marche des rayons (L/L2' ou R/R2) après l'insertion sans ajustage quelconque ultérieure.

3. Stéréomicroscope selon la revendication 1, **caractérisé en ce que** le support forme un composant intégré d'un accessoire de stéréomicroscope, et que l'accessoire de stéréomicroscope est une unité d'observation simultanée, une source lumineuse d'éclairage ou de traitement ou de formage, dont la lumière, en particulier, peut être réfléchie coaxialement dans la marche des rayons pour l'éclairage ou pour le traitement de l'objet observé, ou bien un dispositif, qui superpose un image et/ou des indications réfléchi(s) ou pareil dans l'image de l'oculaire.

4. Stéréomicroscope selon une quelconque des revendications 1 à 3, **caractérisé en ce que** le stéréomicroscope est un microscope d'opération.

5. Stéréomicroscope selon une quelconque des revendications 1 à 4, **caractérisé en ce que** dans le cas qu'un dispositif de fractionnement des rayons (2' ou 3') n'est pas inséré dans une des marches des rayons (L/L2' ou R/R2) du stéréomicroscope, une plaque à faces planes et parallèles est insérée dans le creux (6) respectif de cette marche des rayons, dont le trajet optique correspond à celui-ci du dispositif de fractionnement des rayons (2' ou 3'), et que des dispositifs de fractionnement des rayons différentes, comme des dispositifs de fractionnement d'intensité, de la longueur d'ondes et/ou des dispositifs séparateur spécifique pour l'état de polarisation, peuvent être insérés comme dispositifs de fractionnement des rayons.

6. Stéréomicroscope selon une quelconque des revendications 1 à 5, **caractérisé en ce que** les supports comprennent un code, qui transmet des informations sur l'accessoire de stéréomicroscope relié de façon optique à la marche des rayons (L/L2' ou R/R2) respective à une unité de commande du microscope, et que l'unité de commande effectue une adaptation du stéréomicroscope selon ledit code.
